# FASCICULE DE BREVET EUROPEEN

(11) **EP 1 572 326 B1**
(45) Date de publication et mention de la délivrance du brevet: **09.04.2008**
(21) Numéro de dépôt: 03815403.5
(22) Date de dépôt: 15.12.2003
(51) Int. Cl.: B01D 53/68, B01D 51/10, C25C 3/22

(54) **PROCEDE ET DISPOSITIF DE TRAITEMENT DES EFFLUENTS DE CELLULE D'ELECTROLYSE POUR LA PRODUCTION D ALUMINIUM**
VERFAHREN UND VORRICHTUNG ZUR BEHANDLUNG VON ABGASEN AUS ELEKTROLYSEZELLEN FÜR DIE HERSTELLUNG VON ALUMINIUM
ELECTROLYTIC CELL EFFLUENT TREATMENT METHOD AND DEVICE FOR THE PRODUCTION OF ALUMINIUM

(30) Priorité: 18.12.2002 FR 0216073
(43) Date de publication de la demande: 14.09.2005
(73) Titulaire: ALUMINIUM PECHINEY, 38340 Voreppe (FR)
(72) Inventeur: GIRAULT, Guillaume, F-73130 La Chambre (FR); COUZINIE, Elisabeth, F-73300 St Jean de Maurienne (FR); VANVOREN, Claude, F-73300 St Jean de Maurienne (FR)
(74) Mandataire: Marsolais, Richard
(86) Numéro de dépôt international: PCT/FR2003/003721
(87) Numéro de publication internationale: WO 2004/064984

(56) Documents cités:
- FR-A- 2 626 192
- GB-A- 1 416 344
- US-A- 3 780 497
- US-A- 4 065 271
- US-A- 4 501 599

## Description

### Domaine de l'invention

L'invention concerne la production d'aluminium par électrolyse ignée selon le procédé Hall-Héroult. Elle concerne plus particulièrement le traitement des effluents gazeux produits par les cellules d'électrolyse.

### Etat de la technique

L'aluminium métal est produit industriellement par électrolyse ignée, à savoir par électrolyse de l'alumine en solution dans un bain de cryolithe fondue, appelé bain d'électrolyte, selon le procédé bien connu de Hall-Héroult. Les réactions d'électrolyse, les réactions secondaires et les hautes températures d'opération entraînent la production d'effluents gazeux qui contiennent surtout du dioxyde de carbone, des produits fluorés et de la poussière (d'alumine, de bain d'électrolyte,...).

Le rejet de ces effluents dans l'atmosphère est sévèrement contrôlé et réglementé, non seulement en ce qui concerne l'atmosphère ambiante de la salle d'électrolyse, pour des raisons de sécurité du personnel opérant à proximité des cellules d'électrolyse, mais également en ce qui concerne la pollution atmosphérique. Les réglementations de plusieurs Etats en matière de pollution imposent des limites aux quantités d'effluents rejetées dans l'atmosphère.

Il existe aujourd'hui des solutions qui permettent de confiner, de capter et de traiter ces effluents de manière fiable et satisfaisante. Dans les usines les plus modernes, les effluents sont confinés à l'aide d'un capotage, captés par aspiration et traités dans une installation de traitement chimique de manière à récupérer les gaz fluorés par réaction avec de l'alumine pulvérulente "fraîche", c'est-à-dire de l'alumine contenant peu ou pas du tout de produits fluorés. Les gaz fluorés s'adsorbent sur l'alumine. L'alumine et les poussières issues des cellules d'électrolyse sont ensuite séparées du gaz résiduel et réutilisées, en tout ou partie, pour alimenter des cellules d'électrolyse. Le débit de circulation de l'alumine dans l'installation de traitement est généralement continu.

Le document US 4 065 271 décrit un procédé de traitement des effluents provenant de cellules d'électrolyse pour la production d'aluminium. Dans un premier temps, les effluents sont purifiés par adsorption. Puis les solides sont séparés dans un précipitateur électrostatique. De l'eau est introduite à l'intérieure du réacteur d'adsorption pour ajuster la resistivité électrique des particules.

Le document FR 2 626 192 A1 décrit un procédé de traitement d'un courant gazeux selon lequel on ajoute des corps absorbants dans le courant afin d'en extraire des substances gazeuses puis on filtre le courant afin d'en séparer les corps absorbants. Pour favoriser l'adsorption, le courant gazeux peut être humidifié en différents points du procédé.

Les installations de traitement des effluents comportent typiquement un ou plusieurs réacteurs, dans lesquels les effluents sont mis en contact avec de l'alumine pulvérulente de manière à les faire réagir avec celle-ci, et des filtres pour séparer l'alumine du gaz résiduel. Une partie de l'alumine séparée du gaz résiduel peut être réintroduite dans le réacteur afin d'augmenter l'efficacité du traitement.

Les installations de traitement comportent typiquement une batterie d'unités de traitement en parallèle, chaque unité comprenant un réacteur et une enceinte de filtration comportant des moyens de filtration (typiquement des poches ou des manchons filtrants) et une trémie à fond fluidisé. La demande de brevet français FR 2 692 497 (correspondant au brevet australien AU 4 007 193), au nom de la Société Procédair, décrit une unité de traitement dans laquelle le réacteur et les filtres sont intégrés dans une enceinte commune.

Pour des raisons de rentabilité d'une usine, les producteurs d'aluminium cherchent à obtenir des intensités du courant d'électrolyse les plus élevées possible, tout en préservant, voire en améliorant, les conditions de fonctionnement des cellules d'électrolyse. L'augmentation de l'intensité provoque toutefois un accroissement du débit des effluents et une élévation de leur température. Or, une température élevée des effluents peut entraîner une dégradation des performances du traitement des effluents, voire une dégradation des installations de traitement, notamment les tissus filtrants en matériau polymère habituellement utilisés.

La température des effluents peut être abaissée par dilution avec de l'air ambiant en amont des installations de traitement. Une telle solution conduit toutefois à un accroissement important du débit volumique total des gaz à traiter, qui nécessite une augmentation significative de la taille des installations de traitement requise pour maintenir le débit de traitement des effluents provenant des cellules d'électrolyse, qui est le débit utile de l'installation. Cette augmentation de la taille des installations de traitement accroît les coûts d'investissement et de fonctionnement. Le refroidissement des effluents par dilution d'air ambiant présente en outre l'inconvénient d'être sensible à la température de l'air ambiant.

La demanderesse a donc recherché des moyens, industriellement acceptables et économiques, qui permettent le traitement des effluents de cellules d'électrolyse ayant des températures élevées, c'est-à-dire des températures typiquement supérieures à environ 120°C.

### Description de l'invention

L'invention a pour objet un procédé de traitement des effluents gazeux produits par une cellule de production d'aluminium par électrolyse ignée comportant un refroidissement des effluents en amont des moyens de traitement.

Plus précisément, l'invention a pour objet un procédé de traitement des effluents gazeux produits par une cellule de production d'aluminium par électrolyse ignée dans lequel on achemine les effluents par au moins un conduit vers des moyens de traitement comportant au moins un réacteur et un dispositif de séparation, on introduit les effluents et de l'alumine pulvérulente dans le réacteur, de façon à faire réagir les produits fluorés contenus dans les effluents avec l'alumine, et on sépare l'alumine du gaz résiduel à l'aide du dispositif de séparation, le procédé étant caractérisé en ce qu'on injecte des gouttelettes d'un fluide de refroidissement dans le, ou au moins un des, conduit(s) d'acheminement des effluents, en amont des moyens de traitement.

L'invention a également pour objet une installation de traitement des effluents gazeux produits par une cellule de production d'aluminium par électrolyse ignée comportant au moins un conduit d'acheminement desdits effluents, au moins un réacteur et un dispositif de séparation, et caractérisé en ce qu'il comporte en outre un dispositif d'injection de gouttelettes d'un fluide de refroidissement dans le, ou au moins un des, conduit(s) d'acheminement.

Les effluents sont refroidis par vaporisation desdites gouttelettes. La demanderesse a constaté que, de manière surprenante, il était possible de refroidir efficacement les effluents d'une cellule d'électrolyse de cette manière sans dégrader le fonctionnement de la cellule ou de l'installation de traitement.

L'invention permet d'augmenter le débit massique, et donc le débit utile, d'une installation de traitement sans en augmenter la taille. L'intensité des cellules d'une usine peut être augmentée sans avoir à modifier la taille des installations de traitement des effluents.

L'invention permet également de diminuer la taille des installations de traitement sans réduire le débit d'aspiration "utile" au niveau des cellules d'électrolyse ou l'efficacité du traitement, c'est-à-dire sans augmenter les rejets au niveau des lanterneaux des salles d'électrolyse. Ceci est particulièrement intéressant lors de la construction d'une nouvelle installation de traitement et évite un surdimensionnement de l'installation lié à une dilution des effluents par de l'air ambiant.

L'invention permet d'augmenter l'intensité des cellules d'électrolyse d'une usine sans avoir à remplacer les installations existantes par des installations de plus grande taille.

Le refroidissement des effluents provoque également une diminution de leur débit effectif, ce qui permet de réduire la vitesse de filtration, et donc l'usure des filtres, et de diminuer la consommation électrique des ventilateurs de tirage grâce à une perte de charge plus faible qui n'est pas contrebalancée par l'augmentation de la masse volumique.

L'invention sera mieux comprise à l'aide de la description détaillée ci-dessous et des figures annexées.
La figure 1 illustre, de manière schématique, une cellule d'électrolyse munie d'une installation de traitement des effluents gazeux typique de l'art antérieur.
La figure 2 illustre, de manière schématique, une cellule d'électrolyse munie d'une installation de traitement des effluents gazeux selon un mode de réalisation de l'invention.
La figure 3 illustre, de manière schématique, un dispositif d'injection de gouttelettes de fluide de refroidissement selon un mode de réalisation de l'invention.
La figure 4 illustre, de manière schématique, une variante de l'installation de traitement des effluents selon l'invention.

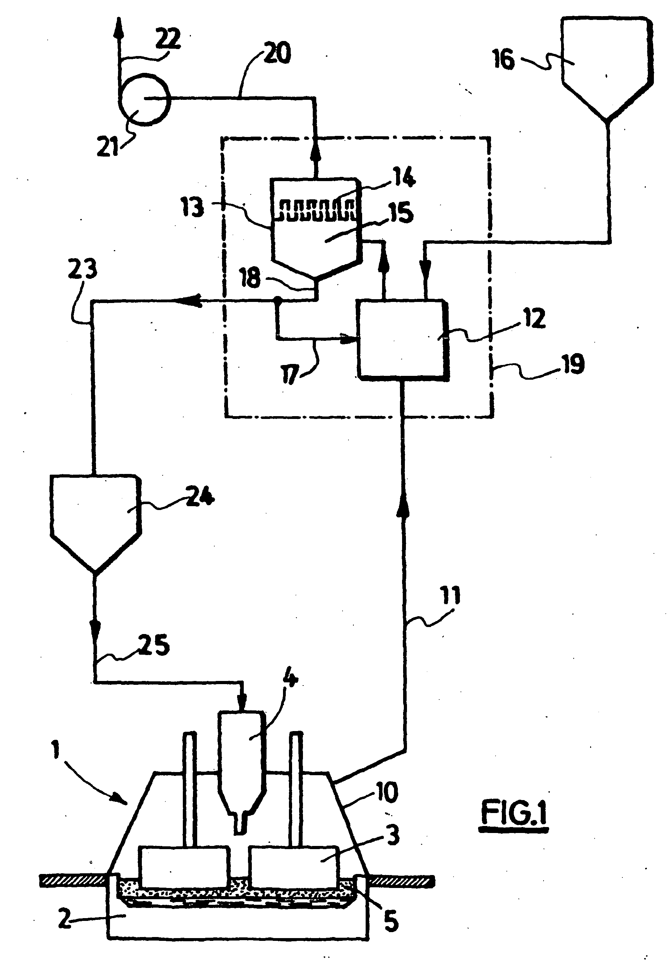

Tel qu'illustré à la figure 1, une cellule de production d'aluminium par électrolyse (1) comporte une cuve (2), des anodes carbonées (3), partiellement immergées dans le bain d'électrolyte (5), et un dispositif (4) pour alimenter le bain en alumine. La cuve (2) est recouverte d'un capotage (10) apte à confiner les effluents gazeux produits par la cellule (1). Le capotage (10) comprend généralement des capots qui sont en tout ou partie amovibles.

Les effluents comportent une partie gazeuse (contenant surtout de l'air, du dioxyde de carbone et des produits fluorés) et une partie solide ou "poussière" (contenant de l'alumine, du bain d'électrolyte,...). Les effluents sont typiquement extraits du capotage (10) par aspiration, à l'aide d'un ou plusieurs ventilateurs (21) situés en aval de l'installation de traitement (12-19). Ils sont acheminés vers les moyens de traitement (12-19) à l'aide d'un ou plusieurs conduits (11). Le traitement permet d'extraire les produits fluorés contenus dans les effluents et laisse une fraction gazeuse résiduelle contenant une quantité négligeable de produits fluorés. La fraction gazeuse résiduelle est donc la fraction de la partie gazeuse des effluents qui n'a pas réagi avec l'alumine.

Selon l'invention, le procédé de traitement des effluents gazeux produits par au moins une cellule (1) de production d'aluminium par électrolyse ignée comprend un refroidissement des effluents en amont des moyens de traitement (12-19).

Dans un mode de réalisation préféré de l'invention, le procédé de traitement des effluents gazeux produits par au moins une cellule (1) de production d'aluminium par électrolyse ignée comprend :
- l'acheminement desdits effluents par au moins un conduit (11) vers des moyens de traitement (12-19) comportant au moins :
   un réacteur (12) apte à extraire les produits fluorés contenus dans les effluents par réaction avec de l'alumine pulvérulente (16);
   un dispositif de séparation (13) apte à séparer l'alumine issue du/des réacteur(s) (12) et la fraction gazeuse résiduelle et comportant des moyens de filtration (14),
- l'introduction des effluents et d'alumine pulvérulente dans le ou les réacteur(s) (12), de façon à faire réagir les effluents avec l'alumine,
- la séparation de l'alumine et de la fraction gazeuse résiduelle à l'aide du dispositif de séparation (13),
- l'acheminement de tout ou partie de l'alumine issue du dispositif de séparation (13), dite "alumine fluorée", vers une ou plusieurs cellules d'électrolyse (1),
et est caractérisé en ce qu'il comprend en outre l'injection de gouttelettes d'un fluide de refroidissement dans le, ou au moins un des, conduit(s) d'acheminement (11), en au moins un point (P) situé en amont du ou des réacteur(s) (12), de manière à refroidir les effluents par vaporisation dudit fluide avant leur introduction dans le ou les réacteur(s) (12).

L'alumine dite "fraîche" utilisée pour l'extraction des produits fluorés des effluents provient typiquement d'un silo (16).

Une partie (17) de l'alumine "fluorée" (18) issue de l'opération de séparation peut être réintroduite dans le(s) réacteur(s) (12) afin d'augmenter l'efficacité du traitement.

L'acheminement de tout ou partie de l'alumine fluorée issue du dispositif de séparation (13) vers les cellules d'électrolyse (1) peut être direct ou indirect.

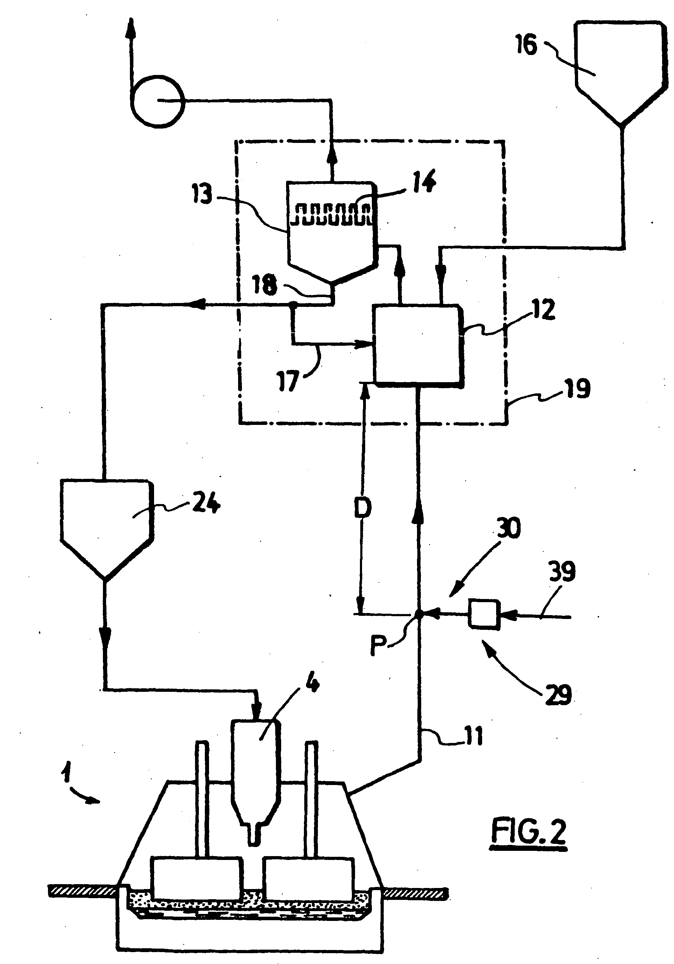

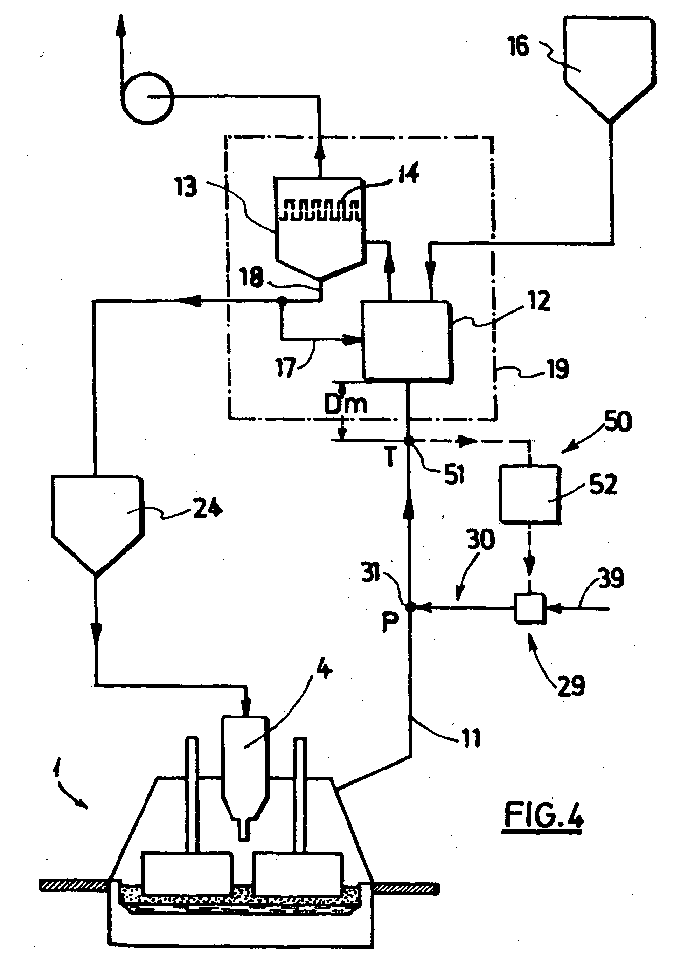

La position d'un point d'injection (P) en amont du/des réacteur(s) (12) est illustrée schématiquement aux figures 2 et 4. Les points d'injection (P) sont typiquement en amont du système de traitement (19) incluant le ou les réacteurs (12).

L'emplacement du ou des points (P) d'injection du fluide de refroidissement dans les conduits d'acheminement (11) est avantageusement tel que les gouttelettes s'évaporent entièrement avant d'atteindre le ou les réacteur(s) (12). Ceci permet d'éviter l'entrée de fluide de refroidissement liquide dans le réacteur, qui pourrait entraîner des problèmes de manutention de l'alumine et une détérioration des moyens de filtration. La distance D entre le ou les points d'injection (P) et chaque réacteur (12) qui permet d'obtenir une vaporisation complète des gouttelettes est typiquement supérieure à 15 m.

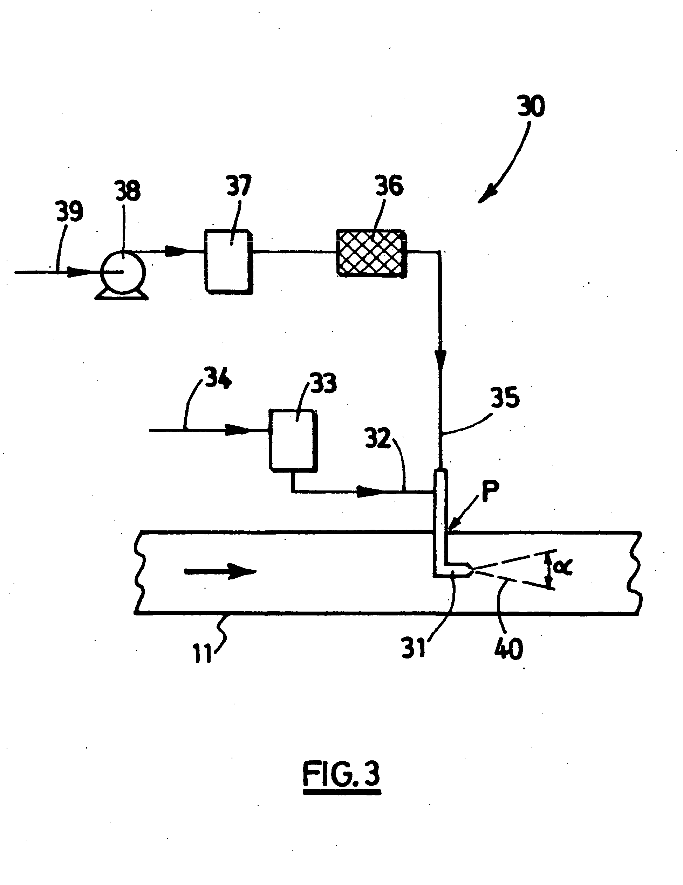

De préférence encore, les gouttelettes de fluide de refroidissement sont entièrement vaporisées avant qu'elles ne rencontrent une paroi proche du point d'injection ou un premier obstacle. Ceci permet d'éviter l'impact de gouttelettes sur la paroi des conduits (11) et/ou l'accumulation de fluide qui pourraient conduire à une corrosion des conduits. Dans ce but, les gouttelettes sont avantageusement injectées dans le sens d'écoulement des effluents. Dans ce même but, les gouttelettes de fluide de refroidissement sont avantageusement injectées sous forme d'un cône de dispersion (ou "cône d'aspersion") (40) ayant un angle d'ouverture α faible, qui est typiquement inférieur à environ 20° (voir la figure 3). Dans ce même but, il est préférable de former des gouttelettes dont la taille est telle qu'elles seront entièrement vaporisées durant leur trajet entre le point, ou les points, d'injection et l'obstacle le plus proche.

Le temps de vaporisation des gouttelettes dépend de la température des effluents et de la taille des gouttelettes. La distance parcourue durant la vaporisation des gouttelettes dépend de 1a vitesse des effluents. Les inventeurs estiment que, pour des installations industrielles typiques et pour des températures de l'ordre de 150°C, la taille des gouttelettes est de préférence inférieure à 100 µm afin de permettre une vaporisation complète de celles-ci avant qu'elles n'atteignent un obstacle ou le réacteur. La taille des gouttelettes est typiquement comprise entre 1 µm et 100 µm car les gouttelettes de taille inférieure à 1 µm sont difficiles à produire. Des gouttelettes très fines peuvent être obtenues à l'aide de buses alimentées avec un mélange de fluide de refroidissement et d'air comprimé.

Le procédé comporte avantageusement un échauffement du fluide de refroidissement avant son introduction dans le ou les conduits d'acheminement (11), afin de diminuer le temps nécessaire à sa vaporisation. Cette variante permet également d'abaisser le seuil de température, qui est typiquement de 120°C, en dessous duquel les gouttelettes ne peuvent être entièrement vaporisées avant d'atteindre le réacteur. L'échauffement peut être effectué par contact d'un conduit d'amenée du fluide de refroidissement (35) avec les conduits d'acheminement (11) des effluents, ou par contact direct du fluide de refroidissement avec les conduits d'acheminement (11), avant son injection dans les effluents. Le fluide de refroidissement est typiquement échauffé jusqu'à une température déterminée, qui est avantageusement 10° à 20° en dessous de la température d'évaporation du fluide.

Selon une variante avantageuse de l'invention, on fait circuler les effluents dans un venturi situé en amont du ou des réacteurs (12) et on injecte tout ou partie des gouttelettes de fluide de refroidissement dans le venturi. En d'autres termes, le procédé selon l'invention comprend avantageusement la circulation des effluents dans un venturi et au moins une partie de ladite injection des gouttelettes de fluide de refroidissement est faite dans le venturi. Le mouvement turbulent des effluents dans le venturi permet d'améliorer le brassage des gouttelettes et d'accélérer leur vaporisation. Une partie des gouttelettes de fluide de refroidissement peut éventuellement être injectée en amont du venturi et/ou en aval de celui-ci.

On peut avantageusement combiner ces différents moyens pour favoriser une vaporisation rapide des gouttelettes (injection des gouttelettes dans le sens d'écoulement des effluents, formation d'un cône d'aspersion de faible ouverture angulaire, formation de gouttelettes de petite taille, échauffement du fluide de refroidissement avant son introduction dans le flux d'effluents et/ou passage des effluents dans un venturi).

Le taux de vaporisation des gouttelettes peut éventuellement être contrôlé à l'aide de détecteurs (tels que des systèmes optiques ou des hygromètres) près de l'entrée du réacteur.

Le débit de fluide de refroidissement nécessaire dépend de la température des effluents, de la chute de température recherchée et de la chaleur latente de vaporisation du fluide de refroidissement. Lorsque le fluide de refroidissement est de l'eau pure, le débit est typiquement compris entre 0,1 et 2 g d'eau/Nm³ d'effluents/°C, et plus typiquement entre 0,2 et 1 g d'eau/Nm³ d'effluents/°C. Ainsi, par exemple, pour abaisser de 10°C la température d'un débit d'effluents de 100 Nm³/s, un débit de fluide de refroidissement de 0,5 g d'eau/Nm³ d'effluents/°C correspond à un débit total de 500 g/s.

On produit avantageusement lesdites gouttelettes par pulvérisation dudit fluide, typiquement à partir de la phase liquide. Cette pulvérisation peut être effectuée en utilisant au moins une buse.

Les gouttelettes peuvent être produites de manière continue ou discontinue.

Le fluide de refroidissement est avantageusement de l'eau ou un liquide contenant de l'eau, car l'eau possède une chaleur latente de vaporisation très élevée. Le liquide contenant de l'eau peut être une solution aqueuse. Le fluide de refroidissement peut éventuellement comprendre un additif apte à éviter la corrosion et/ou à améliorer le traitement des effluents.

Selon un mode de réalisation avantageux de l'invention, on ajuste le taux de production desdites gouttelettes ou le débit de fluide de refroidissement en fonction de valeurs mesurées et/ou de critères déterminés. Par exemple, le débit de fluide peut être ajusté, de manière rétroactive, en fonction de la température des effluents mesurée juste avant leur introduction dans le réacteur, et plus précisément mesurée en un point T situé à une distance déterminée Dm de celui-ci (voir la figure 4). En d'autres termes, le procédé de traitement selon l'invention comporte avantageusement une mesure de la température des effluents en au moins un point T situé à une distance déterminée Dm du ou des réacteur(s) (12) et un ajustement du débit de fluide en fonction de la température mesurée. Selon une variante de ce mode de réalisation, le débit de fluide peut être ajusté, de manière rétroactive, en fonction de mesures de la température des effluents effectuées juste avant leur introduction dans le ou les réacteur(s) (12) et de mesures du débit des effluents effectuées typiquement en amont ou en aval du dispositif d'injection (30). Des mesures de la température des effluents en amont du dispositif d'injection (30) peuvent éventuellement être effectuées afin de déterminer le taux de vaporisation du fluide de refroidissement.

Selon l'invention, l'installation de traitement des effluents gazeux produits par au moins une cellule (1) de production d'aluminium par électrolyse ignée comporte des moyens de traitement (12 - 19) et un dispositif de refroidissement (29) en amont desdits moyens de traitement.

Dans un mode de réalisation préféré de l'invention, le dispositif de refroidissement (29) comprend au moins un dispositif d'injection (30) apte à injecter des gouttelettes de fluide de refroidissement dans lesdits effluents en amont des moyens de traitement (12-19).

Plus précisément, l'installation de traitement des effluents gazeux produits par au moins une cellule (1) de production d'aluminium par électrolyse ignée comporte :
- des moyens de traitement (12-19) comportant au moins :
   un réacteur (12) apte à extraire les produits fluorés contenus dans lesdits effluents par réaction avec de l'alumine pulvérulente (16);
   un dispositif de séparation (13) apte à séparer l'alumine issue du/des réacteur(s) (12) et la fraction gazeuse résiduelle et comportant des moyens de filtration (14),
- au moins un conduit (11) d'acheminement desdits effluents vers lesdits moyens de traitement (12-19),
- des moyens (23, 24, 25) pour acheminer tout ou partie de l'alumine issue du dispositif de séparation (13), dite "alumine fluorée", vers une ou plusieurs cellules d'électrolyse (1),
et est caractérisée en ce qu'elle comporte en outre un dispositif (30) d'injection de gouttelettes d'un fluide de refroidissement dans le, ou au moins un des, conduit(s) d'acheminement (11), en au moins un point (P) situé en amont du ou des réacteur(s) (12).

Le ou les réacteur(s) (12) et le ou les dispositif(s) de séparation (13) peuvent être regroupés en un unique système de traitement (19).

Chaque réacteur (12) comprend typiquement des moyens pour mettre de l'alumine pulvérulente en suspension. Cette variante permet de faire réagir efficacement l'alumine avec les effluents gazeux acheminés par le ou les conduits (11).

Les moyens de filtration (14) du dispositif de séparation (13) sont typiquement intégrés dans une enceinte de confinement (15).

Une partie de l'alumine "fluorée" sortant du dispositif de séparation (13) par le (ou les) conduit(s) de sortie (18) peut être réintroduite dans le(s) réacteur(s) (12) par l'intermédiaire d'un conduit de dérivation (17).

Les moyens d'acheminement (23, 24, 25) comprennent typiquement des moyens de stockage (24) et des conduits de transport (23) et de distribution (25).

La fraction de gaz résiduelle (c'est-à-dire la partie gazeuse des effluents expurgée des produits fluorés) issue du dispositif de séparation (13) est généralement évacuée par les moyens d'évacuation (20, 21, 22). Elle peut éventuellement être traitée par des moyens complémentaires.

Tel qu'illustré à la figure 3, le dispositif d'injection (30) d'un fluide de refroidissement dans le ou les conduits d'acheminement (11) comprend typiquement au moins un moyen d'injection (31) et une source (39) de fluide de refroidissement. Le dispositif d'injection (30) peut comprendre une pompe (38). Dans un mode de réalisation de l'invention, le moyen d'injection (31) est un moyen de pulvérisation, tel qu'une buse ou plusieurs buses. Les moyens de pulvérisations permettent de former au moins un cône de dispersion (ou "cône d'aspersion") (40) des gouttelettes dé fluide de refroidissement qui peut être orienté. Le dispositif d'injection (30) peut aussi comporter un filtre (36) pour arrêter les particules qui pourraient obstruer le moyen de pulvérisation (31). Le ou les moyens d'injection (31) sont avantageusement en un matériau apte à résister à la corrosion ou revêtus d'un matériau apte à résister à la corrosion.

Selon une variante de l'invention, le dispositif d'injection (30) comprend également une source (34) d'air comprimé.

Le dispositif d'injection (30) peut comprendre en outre des moyens de régulation (33, 37), tels qu'un régulateur (37) de la pression et/ou du débit du fluide de refroidissement. Dans la variante de l'invention selon laquelle le dispositif d'injection (30) comporte une source (34) d'air comprimé, le dispositif d'injection (30) comporte avantageusement un régulateur (33) de la pression d'air comprimé. Le dispositif d'injection (30) peut aussi comprendre des moyens de mesure de la pression et/ou du débit de fluide refroidissement et/ou d'air. Ces moyens permettent de contrôler ou de piloter le dispositif d'injection (30). Le contrôle ou le pilotage peuvent être faits par un opérateur, un automate ou un système de régulation.

Le ou les conduits d'acheminement (11) peuvent comprendre un revêtement anti-corrosion sur tout ou partie de leur paroi intérieure, notamment à proximité du ou des points (P) d'injection des gouttelettes.

Selon une variante avantageuse de l'invention, l'installation de traitement comporte un venturi situé en amont du ou des réacteur(s) (12) et au moins un point d'injection (P) des gouttelettes de fluide de refroidissement est situé dans le venturi. Un ou plusieurs points d'injection peuvent éventuellement être situé(s) en amont et/ou en aval du venturi.

Selon une autre variante avantageuse de l'invention, l'installation de traitement comporte un système de régulation (50) comprenant au moins une sonde (51) pour mesurer la température des effluents en amont du ou des réacteur(s) (12) (et plus précisément en un point T situé à une distance déterminée Dm de ceux-ci) et une centrale de pilotage (52) du dispositif d'injection (30) (voir la figure 4). La centrale de pilotage (52) rétroagit typiquement sur le régulateur de pression et/ou de débit du fluide de refroidissement (37) et/ou sur le régulateur de pression d'air comprimé (33), en fonction des valeurs de température mesurées. Le pilotage est typiquement effectué de manière à éviter que la température des effluents excède une valeur seuil Tm déterminée.

### Essais

Un essai de refroidissement avec un procédé et un dispositif selon l'invention a été réalisé sur des cellules de production d'aluminium par électrolyse.

L'installation de traitement était similaire à celle de la figure 2 et comportait en outre un venturi en aval du point d'injection des gouttelettes d'eau. Le dispositif d'injection comportait une buse activée par air comprimé.

Le fluide de refroidissement était de l'eau à température ambiante. L'injection d'eau de refroidissement était continue et a duré 3 semaines.

Les effluents provenaient de 3 cellules d'électrolyse fonctionnant à 495 kA. Le flux des effluents était de 9 Nm³/s environ. La température des effluents à l'entrée du réacteur était de 150 °C environ en l'absence d'introduction de fluide de refroidissement. L'injection d'eau a permis de diminuer la température des effluents de cellule d'au moins 8°C. La diminution de la température a même atteint 20°C.

La demanderesse a noté qu'un débit d'eau de refroidissement suffisant pour abaisser de manière significative la température des effluents augmentait très peu la teneur en eau des effluents. Plus précisément, un débit d'injection d'eau de l'ordre de 2,1 1/min, suffisant pour abaisser la température des effluents de 8 °C environ, a conduit à l'introduction d'environ 0,3 % en poids d'eau dans le flux d'effluents, alors que la teneur en eau des effluents sans injection d'eau se situait entre 0,9 et 1,1 % en poids (les valeurs observées se situent typiquement entre 0,1 et 2 % en poids, selon le taux d'humidité de l'air ambiant).

La demanderesse a également observé que, de manière surprenante, l'eau injectée ne se fixait que très peu sur l'alumine lors du traitement et que les émissions de produits fluorés par la cellule d'électrolyse n'augmentaient pas lorsque les effluents étaient refroidis par injection d'eau. L'eau injectée dans les effluents se retrouvait presque en totalité en cheminée et la teneur en eau de l'alumine ne variait pas de manière significative.

Les performances de l'installation de traitement ne sont pas dégradées par la présence d'eau dans les effluents. Elles se sont même améliorées en moyenne sur la durée des essais, ce que les inventeurs attribuent à une baisse de la température moyenne des effluents.

Ces essais ont également montré que le taux d'attrition de l'alumine (c'est-à-dire la formation de fines par friction) était plus faible qu'en l'absence d'injection d'eau de refroidissement. Partant d'une valeur moyenne de l'ordre de 10 % environ, le taux d'attrition est descendu à 5 % environ durant la période de refroidissement de 3 semaines.

### Liste des repères numériques

- 1: Cellule d'électrolyse
- 2: Cuve
- 3: Anodes
- 4: Dispositif d'alimentation en alumine
- 5: Bain d'électrolyte
- 10: Capotage
- 11: Conduit d'acheminement
- 12: Réacteur
- 13: Dispositif de séparation
- 14: Filtres
- 15: Enceinte de confinement
- 16: Source d'alumine fraîche
- 17: Conduit de dérivation de l'alumine fluorée
- 18: Conduit de sortie de l'alumine fluorée
- 19: Système de traitement
- 20: Conduit d'évacuation
- 21: Ventilateur
- 22: Cheminée
- 23: Conduit de transport de l'alumine fluorée
- 24: Moyen de stockage de l'alumine fluorée
- 25: Conduit de distribution de l'alumine fluorée
- 29: Dispositif de refroidissement
- 30: Dispositif d'injection
- 31: Moyen d'injection
- 32: Entrée d'air comprimé
- 33: Régulateur de pression d'air comprimé
- 34: Source d'air comprimé
- 35: Entrée du fluide de refroidissement
- 36: Filtre
- 37: Régulateur de pression et/ou de débit du fluide de refroidissement
- 38: Pompe
- 39: Source de fluide de refroidissement
- 40: Cône de dispersion des gouttelettes de fluide de refroidissement
- 50: Système de régulation
- 51: Sonde de mesure de la température des effluents
- 52: Centrale de pilotage

## Revendications

1. Procédé de traitement des effluents gazeux produits par au moins une cellule (1) de production d'aluminium par électrolyse ignée comprenant :
- l'acheminement desdits effluents par au moins un conduit (11) vers des moyens de traitement (12-19) comportant au moins :
un réacteur (12) apte à extraire les produits fluorés contenus dans les effluents par réaction avec de l'alumine pulvérulente (16);
un dispositif de séparation (13) apte à séparer l'alumine issue du/des réacteur(s) (12) et la fraction gazeuse résiduelle et comportant des moyens de filtration (14) incluant des tissus filtrants en matériau polymère,
- l'introduction des effluents et d'alumine pulvérulente dans le ou les réacteur(s) (12), de façon à faire réagir les effluents avec l'alumine,
- la séparation de l'alumine et de la fraction gazeuse résiduelle à l'aide du dispositif de séparation (13),
- l'acheminement de tout ou partie de l'alumine issue du dispositif de séparation (13), vers une ou plusieurs cellules d'électrolyse (1),
et **caractérisé en ce qu'**il comprend en outre l'injection de gouttelettes d'un fluide de refroidissement dans le, ou au moins un des, conduit(s) d'acheminement (11), en au moins un point (P) situé en amont du ou des réacteur(s) (12), de manière à refroidir les effluents par vaporisation dudit fluide avant leur introduction dans le ou les réacteur(s) (12).

2. Procédé de traitement selon la revendication 1, **caractérisé en ce que** l'emplacement du ou des points (P) d'injection du fluide de refroidissement dans les conduits d'acheminement (11) est tel que les gouttelettes s'évaporent entièrement avant d'atteindre le(s) réacteur(s) (12).

3. Procédé de traitement selon la revendication 1 ou 2, **caractérisé en ce que** les gouttelettes sont injectées dans le sens d'écoulement des effluents.

4. Procédé de traitement selon l'une des revendications 1 à 3, **caractérisé en ce que** les gouttelettes de fluide de refroidissement sont injectées sous forme d'un cône de dispersion (40) ayant un angle d'ouverture α inférieur à environ 20°.

5. Procédé de traitement selon l'une des revendications 1 à 4, **caractérisé en ce que** la taille des gouttelettes est comprise entre 1 µm et 100 µm.

6. Procédé de traitement selon l'une des revendications 1 à 5, **caractérisé en ce que** lesdites gouttelettes sont produites par pulvérisation dudit fluide.

7. Procédé de traitement selon l'une des revendications 1 à 6, **caractérisé en ce que** le fluide de refroidissement est de l'eau ou un liquide contenant de l'eau.

8. Procédé de traitement selon l'une des revendications 1 à 7, **caractérisé en ce qu'**il comporte une mesure de la température des effluents en au moins un point T situé à une distance déterminée Dm du ou des réacteur(s) (12) et un ajustement du débit de fluide en fonction de la température mesurée.

9. Procédé de traitement selon l'une des revendications 1 à 8, **caractérisé en ce qu'**il comporte en outre un échauffement du fluide de refroidissement avant son introduction dans le ou les conduits d'acheminement (11).

10. Procédé de traitement selon l'une des revendications 1 à 9, **caractérisé en ce qu'**il comprend en outre la circulation des effluents dans un venturi situé en amont du
ou des réacteur(s) (12) et **en ce qu'**au moins une partie de ladite injection des gouttelettes de fluide de refroidissement est faite dans le venturi.

11. Installation de traitement des effluents gazeux produits par au moins une cellule (1) de production d'aluminium par électrolyse ignée comportant :
- des moyens de traitement (12-19) comportant au moins :
. un réacteur (12) apte à extraire les produits fluorés contenus dans lesdits effluents par réaction avec de l'alumine pulvérulente (16);
. un dispositif de séparation (13) apte à séparer l'alumine issue du/des réacteur(s) (12) et la fraction gazeuse résiduelle et comportant des moyens de filtration (14) incluant des tissus filtrants en matériau polymère,
- au moins un conduit (11) d'acheminement desdits effluents vers lesdits moyens de traitement (12-19),
- des moyens (23, 24, 25) pour acheminer tout ou partie de l'alumine issue du dispositif de séparation (13) vers une ou plusieurs cellules d'électrolyse (1), et **caractérisée en ce qu'**elle comporte en outre un dispositif (30) d'injection de gouttelettes d'un fluide de refroidissement dans, le, ou au moins un des, conduit(s) d'acheminement (11), en au moins un point (P) situé en amont du ou des réacteur(s) (12).

12. Installation de traitement selon la revendication 11, **caractérisée en ce que** chaque réacteur (12) comprend des moyens pour mettre de l'alumine pulvérulente (16) en suspension.

13. Installation de traitement selon la revendication 11 ou 12, **caractérisée en ce que** l'emplacement du ou des points (P) d'injection du fluide de refroidissement dans les conduits d'acheminement (11) est tel que les gouttelettes s'évaporent entièrement avant d'atteindre le ou les réacteur(s) (12).

14. Installation de traitement selon l'une quelconque des revendications 11 à 13, **caractérisée en ce que** le dispositif d'injection (30) d'un fluide de refroidissement dans le ou les conduits d'acheminement (11) comprend au moins un moyen d'injection (31) choisi parmi les moyens de pulvérisation.

15. Installation de traitement selon la revendication 14, **caractérisée en ce que** le moyen de pulvérisation comporte au moins une buse.

16. Installation de traitement selon l'une quelconque des revendications 11 à 15,
**caractérisée en ce que** l'installation de traitement comporte un venturi situé en amont du ou des réacteur(s) (12) et **en ce qu'**au moins un point (P) d'injection des gouttelettes de fluide de refroidissement est situé dans le venturi.

17. Installation de traitement selon l'une quelconque des revendications 11 à 16,
**caractérisée en ce que** le ou les conduits d'acheminement (11) comprennent un revêtement anti-corrosion sur tout ou partie de leur paroi intérieure.

18. Installation de traitement selon l'une quelconque des revendications 11 à 17,
**caractérisée en ce que** le dispositif d'injection (30) comprend en outre des moyens de régulation (33,37).

19. Installation de traitement selon la revendication 18, **caractérisée en ce que** les moyens de régulation (33, 37) comprennent un régulateur (37) de la pression et/ou du débit du fluide de refroidissement.

20. Installation de traitement selon la revendication 18 ou 19, **caractérisée en ce que** l'installation de traitement comporte un système de régulation (50) comprenant au moins une sonde (51) pour mesurer la température des effluents en amont du ou des réacteur(s) (12) et une centrale de pilotage (52) du dispositif d'injection (30).

## Claims

1. Process for treatment of gaseous effluents produced by at least one igneous electrolysis aluminium production cell (1) comprising:
- conveying the said effluents through at least one duct (11) to treatment means (12 - 19) comprising at least:
• a reactor (12) to extract the fluorinated products contained in the effluents by reaction with powder alumina (16);
• a separation device (13) to separate alumina output from the reactor(s) (12) and the residual gas fraction and comprising filtration means (14) including filter fabrics made of a polymer material,
- introducing effluents and powder alumina into the reactor(s) (12), so that the effluents will react with alumina,
- separating alumina from the residual gas fraction using the separation device (13),
- conveying all or some of the alumina output from the separation device (13), to one or several electrolytic cells (1),
and **characterised in that** it further comprises injection of cooling fluid droplets into the conveyance duct (11) or at least one of the conveyance ducts (11) at at least one point (P) located upstream of the reactor(s) (12), so as to cool the effluents by vaporisation of the said fluid before they are introduced into the reactor(s) (12).

2. Treatment process according to claim 1, **characterised in that** the location of the injection point(s) (P) of the cooling fluid into the conveyance ducts (11) is such that the droplets evaporate entirely before they reach the reactor(s) (12).

3. Treatment process according to claim 1 or 2, **characterised in that** the droplets are injected in the effluent flow direction.

4. Treatment process according to one of claims 1 to 3, **characterised in that** the cooling fluid droplets are injected in the form of a dispersion cone (40) with an opening angle α lower than about 20°.

5. Treatment process according to one of claims 1 to 4, **characterised in that** the size of droplets is between 1 µm and 100 µm.

6. Treatment process according to one of claims 1 to 5, **characterised in that** the said droplets are produced by pulverisation of the said fluid.

7. Treatment process according to one of claims 1 to 6, **characterised in that** the cooling fluid is water or a liquid containing water.

8. Treatment process according to one of claims 1 to 7, **characterised in that** it includes a measurement of the effluent temperature at at least one point T located at a determined distance Dm from the reactor(s) (12), a nd an adjustment of the fluid flow rate as a function of the measured temperature.

9. Treatment process according to one of claims 1 to 8, **characterised in that** it also comprises heating of the cooling fluid before it is introduced in the conveyance duct(s) (11).

10. Treatment process according to one of claims 1 to 9, **characterised in that** it also comprises circulation of effluents in a Venturi upstream of the reactor(s) (12) and **in that** at least some or all of the cooling fluid droplets are injected into the Venturi.

11. Treatment installation for gaseous effluents produced by at least one igneous electrolysis aluminium production cell (1) comprising:
- treatment means (12 - 19) comprising at least:
• a reactor (12) to extract fluorinated products contained in the said effluents by reaction with powder alumina (16);
• a separation device (13) to separate alumina output from the reactor(s) (12) and the residual gas fraction and comprising filtration means (14) including filter fabrics made of a polymer material,
- at least one conveyance duct (11) carrying the said effluents to the said treatment means (12-19),
- means (23, 24, 25) for conveyance of all or some of the alumina output from the separation device (13) to one or several electrolytic cells (1),
and **characterised in that** it further comprises a device (30) for injection of cooling fluid droplets into the conveyance duct (11) or at least one of the conveyance ducts (11) at at least one point (P) located upstream of the reactor(s) (12).

12. Treatment installation according to claim 11, **characterised in that** each reactor (12) includes means of putting powder alumina (16) into suspension.

13. Treatment installation according to claim 11 or 12, **characterised in that** the location of the injection point(s) (P) of the cooling fluid into the conveyance ducts (11) is such that the droplets evaporate entirely before they reach the reactor(s) (12).

14. Treatment installation according to any one of claims 11 to 13, **characterised in that** the device (30) for inject ion of a cooling fluid into the conveyance duct(s) (11) comprises at least one injection means (31) chosen from among pulverisation means.

15. Treatment installation according to claim 14, **characterised in that** the pulverisation means comprises at least one nozzle.

16. Treatment installation according to any one of claims 11 to 15, **characterised in that** it comprises a Venturi upstream of the reactor(s) (12) and at least one injection point (P) for injecting cooling fluid droplets is located in the Venturi.

17. Treatment installation according to any one of claims 11 to 16, **characterised in that** the conveyance duct(s) (11) comprise an anti-corrosion lining on all or some of their internal wall.

18. Treatment installation according to any one of claims 11 to 1 7, **characterised in that** the injection device (30) further comprises regulation means (33, 37).

19. Treatment installation according to claim 18, **characterised in that** the regulation means (33, 37) comprise a cooling fluid pressure and / or flow rate regulator (37).

20. Treatment installation according to claim 18 or 19, **characterised in that** it comprises a regulation system (50) comprising at least one probe (51) for measuring the temperature of effluents upstream of the reactor(s) (12) and a control unit (52) for the injection device (30).

## Patentansprüche

1. Verfahren zur Behandlung von Abgasen, die von mindestens einer Schmelzflusselektrolysezelle (1) zur Herstellung von Aluminium erzeugt werden, umfassend:
- das Befördern der Abgase über mindestens eine Förderleitung (11) zu Behandlungsmitteln (12-19) bestehend aus mindestens:
einem Reaktor (12), der die in den Abgasen enthaltenen Fluoride durch Reaktion mit pulverförmigem Aluminiumoxid (16) auszuscheiden vermag;
. einer Abscheidevorrichtung (13), die das Aluminiumoxid aus dem bzw. den Reaktoren (12) sowie den Restgasanteil abzuscheiden vermag und Filtermittel (14) aufweist, einschließlich Filtertücher aus Polymerwerkstoff;
- das Einblasen der Abgase und des Aluminiumoxids in den bzw. die Reaktoren (12) zwecks Reaktion der Abgase mit dem Aluminiumoxid,
- das Abscheiden des Aluminiumoxids und des Restgasanteils mittels der Abscheidevorrichtung (13),
- das Befördern des gesamten Aluminiumoxids aus der Abscheidevorrichtung (13) oder eines Teils davon zu einer oder mehreren Elektrolysezellen (1),
und **dadurch gekennzeichnet, dass** es außerdem das Einspritzen von Tröpfchen eines Kühlfluids in die bzw. wenigstens eine der Förderleitungen (11) an mindestens einem, dem bzw. den Reaktoren (12) vorgeschalteten Punkt (P) umfasst, um die Abgase durch Verdampfung des Fluids vor ihrem Einblasen in den bzw. die Reaktoren (12) abzukühlen.

2. Behandlungsverfahren nach Anspruch 1, **dadurch gekennzeichnet, dass** die Lage des bzw. der Punkte (P) für das Einspritzen des Kühlmittels in die Förderleitungen (11) so gewählt wird, dass die Tröpfchen vollständig verdampfen, bevor sie den bzw. die Reaktoren (12) erreichen.

3. Behandlungsverfahren nach Anspruch 1 oder 2, **dadurch gekennzeichnet, dass** die Tröpfchen in Strömungsrichtung der Abgase eingespritzt werden.

4. Behandlungsverfahren nach einem der Ansprüche 1 bis 3, **dadurch gekennzeichnet, dass** die Kühlfluidtröpfchen in Form eines Verteilungskegels (40) eingespritzt werden, der einen Öffnungswinkel α kleiner als etwa 20° hat.

5. Behandlungsverfahren nach einem der Ansprüche 1 bis 4, **dadurch gekennzeichnet, dass** die Größe der Tröpfchen zwischen 1 µm und 100 µm beträgt.

6. Behandlungsverfahren nach einem der Ansprüche 1 bis 5, **dadurch gekennzeichnet, dass** die Tröpfchen durch Zerstäubung des Fluids erzeugt werden.

7. Behandlungsverfahren nach einem der Ansprüche 1 bis 6, **dadurch gekennzeichnet, dass** das Kühlfluid Wasser oder eine Wasser enthaltende Flüssigkeit ist.

8. Behandlungsverfahren nach einem der Ansprüche 1 bis 7, **dadurch gekennzeichnet, dass** es eine Temperaturmessung der Abgase an mindestens einem, in einer bestimmten Entfernung von dem bzw. den Reaktoren (12) gelegenen Punkt T und eine Einstellung der Fluiddurchflussmenge in Abhängigkeit von der gemessenen Temperatur umfasst.

9. Behandlungsverfahren nach einem der Ansprüche 1 bis 8, **dadurch gekennzeichnet, dass** es zudem eine Erwärmung des Kühlfluids vor dessen Einleitung in die Förderleitung(en) (11) umfasst.

10. Behandlungsverfahren nach einem der Ansprüche 1 bis 9, **dadurch gekennzeichnet, dass** es zudem die Zirkulation der Abgase in einem dem bzw. den Reaktoren (12) vorgeschalteten Venturi-Rohr umfasst und dass mindestens ein Teil der Einspritzung der Kühlfluidtröpfchen in dem Venturi-Rohr erfolgt.

11. Anlage zur Behandlung von Abgasen, welche von mindestens einer Schmelzflusselektrolysezelle (1) zur Herstellung von Aluminium erzeugt werden, umfassend:
- Behandlungsmittel (12-19) bestehend aus mindestens:
. einem Reaktor (12), der die in den Abgasen enthaltenen Fluoride durch Reaktion mit pulverförmigem Aluminiumoxid (16) auszuscheiden vermag; einer Abscheidevorrichtung (13), die das Aluminiumoxid aus dem bzw. den Reaktoren (12) sowie den Restgasanteil abzuscheiden vermag und Filtermittel (14) aufweist, einschließlich Filtertücher aus Polymerwerkstoff;
- mindestens eine Förderleitung (11) zum Befördern der Abgase zu den Behandlungsmitteln (12-19),
- Mittel (23, 24, 25) zum Befördern des gesamten Aluminiumoxids aus der Abscheidevorrichtung (13) oder eines Teils davon zu einer oder mehreren Elektrolysezellen (1),
und **dadurch gekennzeichnet, dass** sie außerdem eine Vorrichtung (30) zum Einspritzen von Tröpfchen eines Kühlfluids in die bzw. wenigstens eine der Förderleitungen (11) an mindestens einem, dem bzw. den Reaktoren (12) vorgeschalteten Punkt (P) umfasst.

12. Behandlungsanlage nach Anspruch 11, **dadurch gekennzeichnet, dass** jeder Reaktor (12) Mittel aufweist, um Aluminiumoxid (16) aufzuschlämmen.

13. Behandlungsanlage nach Anspruch 11 oder 12, **dadurch gekennzeichnet, dass** die Lage des bzw. der Punkte (P) für das Einspritzen des Kühlfluids in die Förderleitungen (11) so gewählt ist, dass die Tröpfchen vollständig verdampfen, bevor sie den bzw. die Reaktoren (12) erreichen.

14. Behandlungsanlage nach irgendeinem der Ansprüche 11 bis 13, **dadurch gekennzeichnet, dass** die Einspritzvorrichtung (30) zum Einspritzen eines Kühlfluids in die Förderleitung(en) (11) mindestens ein Einspritzmittel (31) gewählt unter den Zerstäubungsmitteln aufweist.

15. Behandlungsanlage nach Anspruch 14, **dadurch gekennzeichnet, dass** das Zerstäubungsmittel mindestens eine Düse aufweist.

16. Behandlungsanlage nach irgendeinem der Ansprüche 11 bis 15, **dadurch gekennzeichnet, dass** die Behandlungsanlage ein dem bzw. den Reaktoren (12) vorgeschaltetes Venturi-Rohr aufweist und dass sich mindestens ein Punkt (P) für das Einspritzen der Kühlfluidtröpfchen in dem Venturi-Rohr befindet.

17. Behandlungsanlage nach irgendeinem der Ansprüche 11 bis 16, **dadurch gekennzeichnet, dass** die Förderleitungen(en) (11) auf ihrer gesamten Innenwand oder einem Teil davon eine Korrosionsschutzbeschichtung aufweisen.

18. Behandlungsanlage nach irgendeinem der Ansprüche 11 bis 17, **dadurch gekennzeichnet, dass** die Einspritzvorrichtung (30) außerdem Regelungsmittel (33, 37) aufweist.

19. Behandlungsanlage nach Anspruch 18, **dadurch gekennzeichnet, dass** die Regelungsmittel (33, 37) einen Regler (37) zur Regelung von Druck und/oder Durchflussmenge des Kühlfluids aufweisen.

20. Behandlungsanlage nach Anspruch 18 oder 19, **dadurch gekennzeichnet, dass** die Behandlungsanlage ein Regelungssystem (50) mit mindestens einer Sonde (51) zum Messen der Temperatur der Abgase vor dem bzw. den Reaktoren (12) und eine- Steuerungszentrale (52) für die Einspritzvorrichtung (30) aufweist.
